**Europäisches Patentamt**

**European Patent Office**

**Office européen des brevets**

(11) Veröffentlichungsnummer: **0 002 073**
**B1**

(12) **EUROPÄISCHE PATENTSCHRIFT**

(45) Veröffentlichungstag der Patentschrift: **08.02.84**

(51) Int. Cl.³: **B 60 T 8/02**

(21) Anmeldenummer: **78200133.3**

(22) Anmeldetag: **07.08.78**

(54) Schalteinrichtung für die Liftachse eines Nutzfahrzeugs.

(30) Priorität: **10.11.77 DE 2750189**

(43) Veröffentlichungstag der Anmeldung:
**30.05.79 Patentblatt 79/11**

(45) Bekanntmachung des Hinweises auf die Patenterteilung:
**08.02.84 Patentblatt 84/6**

(84) Benannte Vertragsstaaten:
**CH DE FR GB SE**

(56) Entgegenhaltungen:
**DE - A - 2 545 593**
**GB - A - 1 488 287**
**US - A - 3 884 529**

(73) Patentinhaber: **ROBERT BOSCH GMBH**
**Postfach 50**
**D-7000 Stuttgart 1 (DE)**

(72) Erfinder: **Goebels, Hermann J., Ing (grad.)**
**Frankenstrasse 38**
**D-7141 Schwieberdingen (DE)**

Courier Press, Leamington Spa, England.

Schalteinrichtung für die Liftachse eines Nutzfahrzeugs

Die Erfindung geht aus von einer Schalteinrichtung nach der Gattung des Hauptanspruches. Eine solche Schalteinrichtung ist aus der DE—A—25 45 593 bekannt.

Bei dieser bekannten Einrichtung wird die Drehzahl der Triebachse erfaßt und an den Bremsen sämtlicher Räder von Trieb- und Nachlaufachse derselbe Bremdsdruck eingestellt. Dies hat jedoch einmal den Nachteil, daß durch die Erfassung nur einer Achsdrehzahl unterschiedliche Verhältnisse an den Rädern einer Achse—insbesondere bei asymmetrischem Reibbeiwert der Fahrbahn—nicht berücksichtigt werden, so daß erhebliche Giermomente auftreten können, die sich besonders bei Lastkraftwagen verhängnisvoll auswirken, wenn die eine Fahrzeugseite auf trockener Fahrbahn und die andere Fahrzeugseite beispielsweise auf einer Eisplatte läuft. Zum anderen werden die Verhältnisse an der Nachlaufachse bei der bekannten Einrichtung jedoch überhaupt nicht berücksichtigt, so daß an beiden Achsen dieselbe Bremswirkung eintritt.

Für einen wirtschaftlichen Fahreinsatz sind Nachlaufachsen von Nutzfahrzeugen häufig als Liftachsen ausgeführt, die bei leerem oder teilbeladenem Fahrzeug angehoben werden können und so einen geringen Reifenverschleiß und durch die Reduzierung des Rollwiderstandes auch einen geringeren Kraftstoffverbrauch bewirken. Derartige Liftachsen sind beispielsweise aus der DE—A—24 39 588 bekannt.

Aus der GB—A—1 488 287 ist ein Antiblockiersystem für Fahrzeuge mit Tandem-Achsen, d.h. Achsaggregaten mit zwei angetriebenen Achsen bekannt, bei der beim Bremsvorgang eine Ungleichverteilung der Achslast zwischen der vorderen und der hinteren Triebachse in der Art eingestellt wird, daß die hintere Triebachse weniger belastet wird als die vorauslaufende. Durch diese Minderbelastung der hinteren Triebachse stellt sich an dieser eine erhöhte Blockierneigung ein. Es wird hierbei lediglich je ein Rad dieser Achse mit einem Sensor auf Blockieren überwacht und das jeweilige Blockierregelsignal für das vordere und hintere Rad einer Seite zur Regelung der Räder herangezogen. Bei gleichem Reibbeiwert auf beiden Fahrzeugseiten werden jedoch auch bei dieser Anordnung die nichtsensierten Räder mit derselben Bremskraft beaufschlagt wie die sensierten Räder. Diese bekannte Anordnung hat jedoch den Nachteil, daß die Ungleichverteilung der Achsbelastung durch aufwendige Maßnahmen in der Achsaufhängung herbeigeführt werden muß.

Vorteile der Erfindung

Die Schalteinrichtung mit den kennzeichnenden Merkmalen des Hauptanspruches hat demgegenüber den Vorteil, daß eine sehr einfache Regelkreisanordnung une eine ausreichend gute Blockierschutzregelung der Räder der Liftachse sichergestellt wird, so daß bei abgesenkter Liftachse stets alle Räder des Achsaggregates zur Bremsung beitragen. Die hierzu erforderlichen gegenständlichen Maßnahmen, die in den Ansprüchen 2 bis 7 im einzelnen aufgeführt sind, betreffen lediglich eine Beeinflussung der Bremskreise, die mit einfachen Mitteln vorzunehmen ist, wobei zusätzlich eine Wartung der hierzu erforderlichen Elemente einfach bewerkstelligt werden kann.

Durch die in den Unteransprüchen aufgeführten Maßnahmen sind vorteilhafte Weiterbildungen der im Hauptanspruch angegebenen Schalteinrichtung möglich.

So kann die erfindungsgemäß vorgesehene definierte Bremsdruckreduzierung an den Rädern der Liftachse einmal durch Einbau eines Rückhalteventils in die Bremsleitungen dieser Räder bewirkt werden. Zum anderen können in den Bremsleitungen der Räder der Liftachse Schnell-Löseventile vorgesehen sein, die eine verminderte Bremswirkung bei zuströmendem Bremsdruck und ein schnelles Bremslösen bei abströmendem Bremsdruck bewirken. Beide Maßnahmen eignen sich besonders für Nachrüstanwendungen, bei denen konstruktive Änderungen der Bremsanlage nicht zweckmäßig sind.

Weiterhin können jedoch auch die Bremsen an den jeweiligen Rädern entsprechend dimensioniert werden, so daß sich eine definierte Bremsdruckreduzierung ergibt und schließlich ist es möglich, Bremsbeläge mit definiert unterschiedlichen Reibbeiwerten zu verwenden.

Mehrere Ausführungsbeispiele der Erfindung sind in der Zeichnung dargestellt und in der nachfolgenden Beschreibung näher erläutert. Es zeigen: Figur 1 ein Fahrzeug mit angehobener Liftachse, Figur 2 die erfindungsgemäße Schalteinrichtung für die Trieb- und die Liftachse, Figur 3 die Anordnung von Rückhalteventilen, Figur 4 ein Rückhalteventil im Schnitt, Figur 5 eine Druckreduzierung durch Änderung des Übersetzungsverhältnisses und Figur 6 ein Schnell-Löseventil als Mittel zur Druckreduzierung.

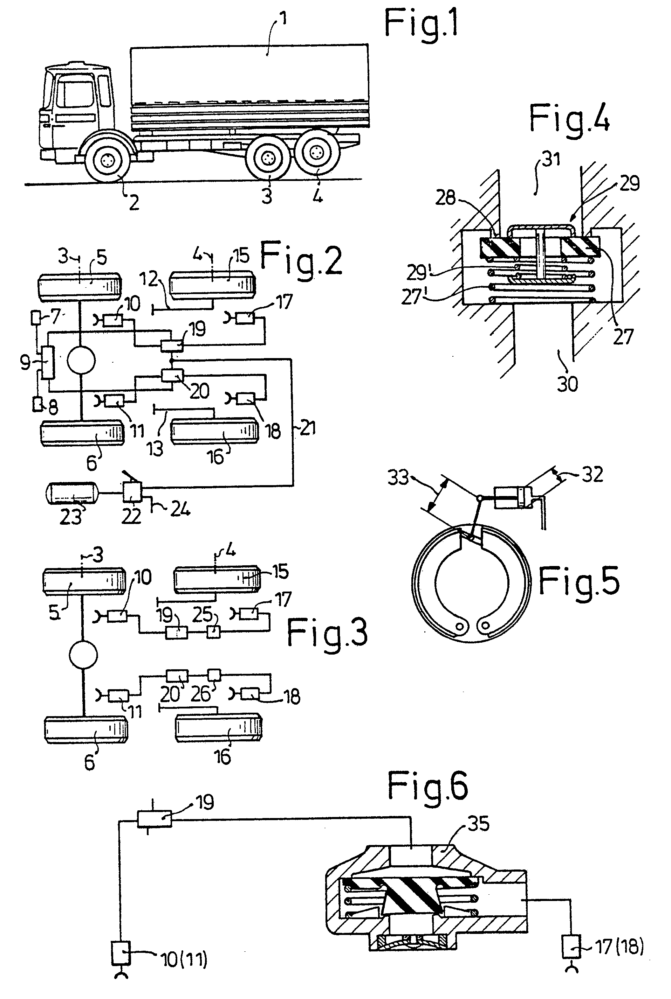

Das in der Figure 1 dargestellte Nutzfahrzeug 1 hat eine Lenkachse 2, eine Triebachse 3 und eine Liftachse 4. Die Liftachse 4 wird bei leerem oder halbbeladenem Fahrzeug wie dargestellt angehoben, um den Reifenverschleiß und den Roll-widerstand zu vermindern.

In der Figur 2 sind die Triebachse 3 und die Liftachse 4 noch einmal dargestellt. Die Triebachse 3 hat zwei Räder 5 und 6 (es können auch Radpaare sein), und jedem Rad 5 bzw. 6 (Radpaar) ist ein Sensor 7 bzw. 8 zugeordnet. Beide Sensoren 7 und 8 sind an ein elektronisches Überwachungsgerät 9 angeschlossen. Außerdem hat jedes Rad 7 bzw. 8 noch einen eigenen Bremszylinder 10 bzw. 11.

Die Liftachse 4 ist mit einem nicht dargestellten Schaltventil zum Anheben und Absenken derselben versehen. Je ein Schwenkarm für die Liftachse 4 trägt die Bezugszahl 12 bzw. 13. Die Liftachse hat ebenfalls zwei Räder 15 und 16 (es können auch Radpaare sein), und jedem Rad 15 bzw. 16 ist ein eigener Bremszylinder 17 bzw. 18 zugeordnet. Sensoren sind hier nicht vorgesehen.

Die beiden Bremszylinder 10 und 17 bzw. 11 und 18 je einer Fahrzeugseite sind an je ein Drucksteuerventil 19 bzw. 20 angeschlossen, und jedes Drucksteuerventil 19 bzw. 20 hat eine elektrische Leitungsverbindung zum elektroni- schen Überwachungsgerät 9. Beide Druck- steuerventile 19 und 20 sind über eine Bremsleitung 21 an ein Bremsventil 22 angeschlossen, das Vorratsluft aus einem Vorratsbehälter 23 erhält und das außerdem eine Außenluftverbindung 24 hat.

Beim Bremsen werden über das Bremsventil 22 alle vier Bremszylinder 10, 11, 17 und 18 der beiden Achsen 3 und 4 mit Druckluft aus dem Vorratsbehälter 23 beschickt.

Die Bremsdruckeinsteuerung in die Bremszylinder der Liftachse 4 erfolgt unabhängig davon, ob sie abgelassen ist und mitläuft oder ob sie angehoben ist und stillsteht.

Tritt ein Blockierschutzfall auf, so können entsprechende Signale nur an den Rädern 5 und 6 der Triebachse abgenommen werden, wo die Sensoren 7 und 8 angeordnet sind, die Teile einer Blockierschutzeinrichtung 7, 8, 9, 19, 20 sind, zu der auch noch die elektronische Überwachungseinrichtung 9 sowie die beiden Drucksteuerventile 19 und 20 zählen.

Um sicher zu sein, daß eine solche einfache Steuerung für die Räder 5, 6, 15, 16 beider Achsen 3 und 4 ausreicht, sind Mittel vorgesehen, mit deren Hilfe die Räder 5 und 6 der Triebachse 3 immer blockiergefährdeter sind als die Räder der Liftachse 4. Solche Mittel sind gemäß der Figur 3 ein Rückhalteventil 25 bzw. 26, das zwischen jedem Drucksteuerventil 19 bzw. 20 und dem Bremszylinder 17 bzw. 18 der Liftachse 4 vorgesehen ist.

Diese Rückhalteventile 25 und 26 sorgen dafür, daß Blockiergefahr nur an den Rädern 5 und 6 Triebachse 3 auftritt, und eine solche Blockiergefahr wird von der Blockierschutzeinrichtung 7, 8, 9, 19 und 20 erfaßt.

In der Figur 4 ist eines der beiden Rückhalteventile 25 und 26 im Schnitt dargestellt. Es ist zu erkennen, daß es ähnlich wie ein Bodenventil eines hydraulischen Hauptbremszylinders mit einem durch eine Feder 27′ belasteten Schließkörper 27 versehen ist, der nach einer Richtung einen Durchlaß durch Abheben von einem gehäusefesten Ventilsitz 28 freigibt und der für die entgegengesetzte Durchflußrichtung mit einem durch eine Feder 29′ belasteten Rückschlagventil 29 versehen ist. Es hat einen Eingang 30 und einen Ausgang 31.

Die Funktionsweise eines solchen Rück- halteventils 25 bzw. 26 ist folgende:

Da der Eingang 30 mit dem Bremsdrucksteuerventil 19 bzw. 20 und der Ausgang 31 mit dem Liftachsen-Bremszylinder 17 bzw. 18 verbunden ist, ist die Feder 29′ für den Rückhaltedruck bei Bremsdruckaufbau und die Feder 27′ für den Rückhaltedruck bei Bremsdruckabbau bestimmend. Die Federkraft der Feder 29′ in Verbindung mit der Ventilsitzgröße von Ventil 29 ist im Verhältnis zu der Federkraft der Feder 27′ und der Ventilsitzgröße von Ventil 27, 27′ so ausgelegt, daß sich bei Bremsdurckaufbau ein deutlich größerer Ansprechdruck einstellt als bei Bremsdruckabbau.

Dies hat zur Folge, daß der Bremsdruck des Liftachsenbremszylinders 17 bzw. 18 immer nur diesen Ansprechdruck gegenüber dem parallel angesteuerten Triebachsenbremszylinder 10 bzw. 11 reduziert ist und zwar unabhängig vom zeitlichen Verhalten der Bremsdruckeinsteuerung bzw. der Höhe des Druckniveaus.

Bei idealen Verhältnissen an beiden Achsen würde zur Sicherstellung der definierte Blockierneigung einer verbestimmen Achse eine sehr geringe Druckdifferenz an den Achsen ausreichen. Um jedoch etwaige Unterschiede in der Bremsleistung der beiden zusammengefaßten Radbremsen einer Seite mit zu berücksichtigen, ist der Rückhaltedruck beim Bremsdruckaufbau vorzugsweise auf 0,5 bis 0,8 bar eingestellt. Der dabei eintretende geringe Abbremsverlust ist vernachlässigbar klein.

Im Falle einer Blockiergefahr ist hierdurch jedoch sichergestellt, daß das sensierte Triebachsen-Rad 5 bzw. 6 zuerst an die Grenze der übertragbaren Bremskraft gelangt und somit frühzeitig den Regelvorgang einleiten kann.

Damit die Bremsdruck-Reduzierung auch des Liftachsen-Bremszylinders 17 bzw. 18 unverzögert erfolgen kann, ist der Ansprechdruck sehr klein gewählt, beispielsweise <0,1 bar.

Dies ist wichtig, damit auch bei plötzlichen Reibwertänderungen von hohen auf niederen Reibwerten der Druckabbau im Liftachsen- Bremszylinder 17 bzw. 18 unverzögert und ungedrosselt erfolgen kann und Blockierphasen dieser Achse 4 vermieden werden. Außerden würde sonst ein unnötig hoher Restdruck in diesem Bremszylinder 17 bzw. 18 verbleiben.

Wie die Figur 5 zeigt, ist es auch möglich, die Reduzierung der Bremswirkung der Liftachse durch Änderung der Übersetzungsverhältnisse, durch Verkleinern der Bremszylinderwirkfläche 32 oder des Bremswellenhebelarmes 33 vor- zunehmen. Hierbei sind keinerlei Ansprechsch- wellen wirksam, so daß in den zusammengefaßten Bremszylindern einer Fahrzeugseite der gleiche Bremsdruck wirksam ist.

Da außerdem das in Fahrtrichtung vorauslaufende Triebachsenrad durch die eigene Sensierung die Regelung bestimmt, ist selbst bei plötzlichen Reibwertänderungen der Fahrbahn ein Blockieren des hinterherlaufenden Liftachsen-Rades nahezu ausgeschlossen.

Auf diese Weise wird eine Liftachse auf einfachste Art überwacht, wobei für die angehobene bzw. ausgefahrene Liftachse keinerlei zusätzliche Maßnahmen getroffen werden müssen.

Es ist auch möglich, die Rückhalteventile nach den Figuren 3 und 4 oder die Reduzierung der Bremswirkung nach der Figur 5 durch Verwendung eines Bremsbelags mit geringerem Reibwert zu ersetzen.

In der Figur 6 ist ein Schnell-Löseventil 35 dargestellt, das einem Liftachsen-Bremszylinder 17 oder 18 vorgeschaltet ist. Auch ein solches Schnell-Löseventil dient der Reduzierung, denn sein Schließkörper vermindert einerseits etwas den Bremsdruck, andererseits erfolgt beim Bremslösen der Entlüftungs- vorgang des Bremszylinders 17 oder 18 unmittelbar über das Schnell-Löseventil 35. Durch das schnelle Entlüften ist erreicht, daß die Bremsdruckverminderung auch bei langen Leitungen unverzögert durchgreift und daß der Druckabsenk-Gradient des Triebachsen-Bremszylinders 10 bzw. 11 nicht durch das Volumen des Liftachsen-Bremszylinders 17 bzw. 18 ungünstig beeinflußt wird.

## Patentansprüche

1. Schalteinrichtung für mit einer Blockierschutzeinrichtung versehenes Nutzfahrzeug, mit einer Triebachse und einer unmittelbar hinter ihr angeordneten Nachlaufachse, wobei die Bremswirkung an Trieb- und Nachlaufachse in Abhängigkeit von den Signalen von der Triebachse zugeordneten Sensoren geregelt wird, dadurch gekennzeichnet, daß die Nachlaufachse eine Liftachse it, daß ferner die beiden Räder (5, 6) der Triebachse (3) mit je einem Sensor (7, 8) versehen sind und daß durch das jeweils sensierte Achsenrad (5 bzw. 6) die seitenweise Regelung des Bremsdruckes des entsprechenden, in gleicher Spur laufenden Rades des Liftachse (15 bzw. 16) über ein gemeinsames Drucksteuerventil (19 bzw. 20) bestimmt ist und daß Mittel (25, 26; 32, 33; 35) verwendet sind, durch die die Bremswirkung auf die Räder (15, 16) der Liftachse (4) gegenüber der Bremswirkung auf die Räder (5, 6) der Triebachse (3) reduziert ist.

2. Schalteinrichtung nach Anspruch 1, dadurch gekennzeichnet, daß die Mittel durch je ein in den Bremsleitungen der Räder (15, 16) der Liftachse (4) angeordnetes Rückhalteventil (25, 26) gebildet werden, die eine Bremsdruckreduzierung an diesen Rädern gegenüber den Rädern (5, 6) der Triebachse bewirken.

3. Schalteinrichtung nach Anspruch 2, dadurch gekennzeichnet, daß der Ansprechdruck der Rückhalteventile (25, 26) bei abströmendem Bremsdruck sehr klein, vorzugsweise kleiner als 0,1 bar ist.

4. Schalteinrichtung nach Anspruch 1, dadurch gekennzeichnet, daß die Mittel durch in den Bremsleitungen der Räder (15, 16) der Liftachse (4) befindliche Schnell-Löseventile (35) gebildet werden, die eine verminderte Bremswirkung bei zuströmendem Bremsdruck und ein schnelles Bremslösen der Räder (15, 16) bei abströmendem Bremsdruck bewirken.

5. Schalteinrichtung nach Anspruch 1, dadurch gekennzeichnet, daß die Mittel durch eine gegenüber der Triebachse (3) verminderte Wirkfläche (32) der Bremszylinder (17, 18) der Räder (15, 16) der Liftachse gebildet werden.

6. Schalteinrichtung nach einem der vorhergehenden Ansprüche, dadurch gekennzeichnet, daß die Mittel durch einen gegenüber der Triebachse (3) verkürzten Wellenhebelarm (32) der Bremszylinder (17, 18) der Räder (15, 16) der Liftachse gebildet werden.

7. Schalteinrichtung nach einem der vorhergehenden Ansprüche, dadurch gekennzeichnet, daß die Mittel durch einen gegenüber der Triebachse (3) verminderten Reibwert des Bremsbelages der Bremsen der Räder (15, 16) der Liftachse gebildet werden.

## Revendications

1. Dispositif de commande pour un véhicule utilitaire équipé d'un dispositif antiblocage des roues et comprenant un essieu traîné directement à la suite d'un essieu moteur, avec réglage de l'action de freinage sur ces deux essieux en fonction de signaux fournis par des capteurs conjugués à l'essieu moteur, caractérisé en ce que l'essieu traîné est un essieu relevable, que les deux roues (5, 6) de l'essieu moteur (3) sont munies chacune d'un capteur (7, 8), que la roue à capteur (5, 6) détermine le réglage de la pression de freinage, s'effectuant séparément pour chaque côté du véhicule, de la roue (15 respectivement 16) correspondante et la suivant directement de l'essieu relevable, au moyen d'une vanne de réglage de pression commune (19) respectivement 20), et que des moyens (25, 26; 32, 33; 35) sont prévus pour réduire l'action de freinage sur les roues (15, 16) de l'essieu relevable (4) par rapport à l'action de freinage sur les roues (5, 6) de l'essieu moteur (3).

2. Dispositif de commande selon la revendication 1, caractérisé en ce que lesdits moyens sont constitués par une soupape de retenue (25, 26) disposée dans chacune des conduites de frein des roues (15, 16) de l'essieu relevable (4) et produisant sur ces roues une réduction de la pression de freinage par rapport aux roues (5, 6) de l'essieu moteur.

3. Dispositif de commande selon la revendication 2, caractérisé en ce que la pression de réponse des soupapes de retenue (25, 26) à l'abaissement de la pression de freinage est très faible, de préférence inférieure à 0,1 bar.

4. Dispositif de commande selon la revendication 1, caractérisé en ce que lesdits moyens sont constitués par des soupapes de desserrage rapide (35) disposées dans les conduites de frein des roues (15, 16) de l'essieu relevable (4) et produisant une action de freinage amoindrie à l'établissement de la pression de freinage et un desserrage rapide des freins des roues (15, 16) à l'abaissement de la pression de freinage.

5. Dispositif de commande selon la revendication 1, caractérisé en ce que lesdits moyens sont constitués par une face utile (32) plus petite sur les cylindres de frein (17, 18) des roues (15, 16) de l'essieu relevable que sur les cylindres de frein des roues de l'essieu moteur (3).

6. Dispositif de commande selon l'une des revendications précédentes, caractérisé en ce que lesdits moyens sont constitués par un bras de levier raccourci (32) de l'arbre des cylindres de frein (17, 18) des roues (15, 16) de l'essieu relevable, par rapport à ce bras de levier sur l'essieu moteur (3).

7. Dispositif de commande selon l'une des revendications précédentes caractérisé en ce que lesdits moyens sont constitués par un coefficient de friction réduit de la garniture des freins des roues (15, 16) de l'essieu relevable, par rapport à ce coefficient de friction sur l'essieu moteur (3).

**Claims**

1. A control device for a commercial vehicle provided with an anti-skid system, having a drive axle and a trailing axle disposed directly therebehind, the braking action on the drive axle and trailing axle being controlled in dependence upon the signals from sensors associated with the drive axle, characterised in that the trailing axle is a lift-up axle, in that the two wheels (5, 6) of the drive axle (3) are each provided with a sensor (7, 8), and in that the axle wheel (5 or 6) sensed at any given time determines, by way of a common pressure-control valve (19 or 20), the side-wise regulation of the brake pressure of the corresponding wheel of the lift-up axle (15 or 16) running in the same track, and in that means (25, 26; 32, 33; 35) are used by which the braking action on the wheels (15, 16) of the lift-up axle (4) is reduced relative to the braking action on the wheels (5, 6) of the drive axle (3).

2. A control device as claimed in claim 1, characterised in that the means are formed by a respective holding valve (25, 26) disposed in each of the brake lines of the wheels (15, 16) of the lift-up axle (4), which holding valves reduce the brake pressure at the latter wheels relative to the wheels (5, 6) of the drive axle.

3. A control device as claimed in claim 2, characterised in that the response pressure of the holding valves (25, 26) is very low, preferably lower than 0.1 bar, when the brake pressure is flowing away.

4. A control device as claimed in claim 1, characterised in that the means are formed by rapid-release valves (35) which are located in the brake lines of the wheels (15, 16) of the lift-up axle (4) and which reduce the braking action when the brake pressure is flowing in and effect rapid release of the brakes of the wheels (15, 16) when the brake pressure is flowing away.

5. A control device as claimed in claim 1, characterised in that the means are formed by an effective surface area (32) of the brake cylinders (17, 18) of the wheels (15, 16) of the lift-up axle, being reduced relative to the drive axle (3).

6. A control device as claimed in one of the preceding claims, characterised in that the means are formed by a shaft lever arm (32) of the brake cylinders (17, 18) of the wheels (15, 16) of the lift-up axle being shortened relative to the drive axle (3).

7. A control device as claimed in one of the preceding claims, characterised in that the means are formed by the coefficient of friction of the brake linings of the brakes of the wheels (15, 16) of the lift-up axle being reduced relative to the drive axle (3).

# Fig.1

# Fig.4

# Fig.2

# Fig.3

# Fig.5

# Fig.6